# EUROPÄISCHE PATENTSCHRIFT

(11) **EP 0 734 604 B1**
(45) Veröffentlichungstag und Bekanntmachung des Hinweises auf die Patenterteilung: **17.06.1998**
(21) Anmeldenummer: 94910329.5
(22) Anmeldetag: 02.03.1994
(51) Int. Cl.: H02G 9/04, E03F 3/04, E02B 11/00

(54) **KABELKANALELEMENT**
CABLE DUCT ELEMENT
ELEMENT DE CONDUIT DE CABLE

(30) Priorität: 02.03.1993 DE 4307260
(43) Veröffentlichungstag der Anmeldung: 02.10.1996
(73) Patentinhaber: Wirthwein, Udo, 97993 Creglingen (DE); Frenzel, Jürgen, D-31084 Freden (DE)
(72) Erfinder: Wirthwein, Udo, 97993 Creglingen (DE); Frenzel, Jürgen, D-31084 Freden (DE)
(74) Vertreter: Effert, Udo, Dipl.-Ing.
(86) Internationale Anmeldenummer: DE9400269
(87) Internationale Veröffentlichungsnummer: WO9421018

(56) Entgegenhaltungen:
- EP-A- 0 194 228
- EP-A- 0 542 701
- AU-B- 618 703
- DE-A- 2 327 618
- DE-A- 2 601 641
- DE-A- 3 500 271
- DE-A- 3 609 973
- DE-U- 7 044 831
- FR-A- 1 430 358
- FR-A- 2 199 779
- FR-A- 2 652 839
- GB-A- 1 515 686

## Beschreibung

Die Erfindung betrifft ein einerdbares, begehbares Element für einen Kabelkanal aus Kunststoff, auch in Kombination mit wasserdurchlässigen Mitteln sowie die Verwendung von Styroporkörpern oder ähnlichem als Drainageelement.

Der überwiegende Teil der Bahnstrecken wird heute mit Kabelkanälen aus Beton ausgestattet. Diese Betonkanäle bestehen aus dickwandigen im Querschnitt U-förmigen, wannenartigen Betontrögen von ca. 0,5 bis 1 m Länge und werden von ebensolchen begehbaren Deckeln, die gegebenenfalls gegen Wassereinbruch abgedichtet sind, abgedeckt (DE-U 74 22 849). In manchen Fällen sind derartige Betonkanäle (DE-U 87 07 940) mit Stahlplatten abgedeckt, die innerhalb speziell in die Tröge eingelassener Stahlformstücke liegen. Dabei können diese Stahlformstücke auch noch Auflager zur selektiven Lagerung von Kabel bilden. Derartige Kabelkanäle werden in der Regel auf dem Planum neben dem Schotterbett der Bahngleise in dafür vorzurichtende Gräben - in der Regel direkt neben der Bahndammböschung - angeordnet. In dem Schotterbett und dem Planum fallen großen Mengen Oberflächenwässer an, sodaß die Gefahr besteht, daß die Betontröge durchfeuchtet und/oder weggeschwemmt oder nach einem Grundbruch wegen Wassereinbruch aus ihrer Sollage verdrängt werden. Aus diesem Grunde werden unter den Kabeltrögen umfangreiche Dränagemaßnahmen vorgenommen, beispielsweise eine wasserundurchlässige Folie in den Damm eingelegt und die Kabeltröge mit Feinsand und Filterkies umgeben oder es werden Dränagerohre unterhalb der Kabeltröge verlegt.

Für derartige Betonkanäle ist mit der DE-C2 35 00 271 bereits vorgeschlagen worden, gleisseitig neben den Kabeltrögen Formsteine zum Abführen von Wasser anzuordnen, die eine langgestreckte Quaderform mit im wesentlichen senkrechten Seitenwänden haben und im oberen Teil aus wasserdurchlässigen und im unteren Teil aus wasserundurchlässigem Material mit integriertem Wasserabführkanal bestehen, so daß Oberflächenwasser und auch Grundwasser im Damm an dem Kabeltrog vorbeigeführt werden kann.

Kabeltröge aus Beton bedingen also aufwendige Erdarbeiten, sind zudem sehr schwer und können in der Regel nur mit entsprechendem Gerät zur Baustelle transportiert und dort eingebracht werden. Zudem ist bei jeder Änderung der Trassenführung die Filterschicht aus Kies und/oder Feinsand verloren. Da die Betontröge an ihren Enden nur mit Schürzen einander überlappen, können sie auch leicht aus ihrer Sollposition gedrückt werden.

Hauptsächlich aus Gewichtsgründen und verlegetechnischen Vorteilen, ist bereits vorgeschlagen worden (DE-A1 33 10 999) Kabelkanalformstücke mit einem Unterteil und einem größere Höhe aufweisenden Oberteil, die beide aus rinnenförmig gebogenen Stahlwellblechen mit quer zur Formstück-Längsrichtung verlaufenden Wellen bestehen, einzusetzen. Die beiden Stahlhauben werden verbunden, indem über Schultern nach innen versetzte Ränder des Oberteils in nach innen versetzte Ränder des Unterteils greifen, wobei die Ränder durch Stützen und/oder Scharniere in Position gehalten werden. An der Trennlinie zwischen den beiden Stahlhüllen kann ein Kunststoffquerteil horizontal eingesetzt werden, um über und unter dem Zwischenboden verschiedenartige Kabel in getrennter Position zu halten. Damit ein derartiger Kanal in Position bleibt, wird vorgeschlagen, die untere Stahlschale innen mit Sand zu füllen, der dann gleichzeitig als Auflagebett für bestimmte Kabel dienen kann. Zwar ist bei einem derartigen Kanal das Gewichtsproblem reduziert, jedoch wirkt ein Stahlblechkanal, der eingeerdet ist, als Fremdkörper im Bahngleis, zumal er nicht begangen werden kann und daher eine zusätzliche Böschungsbreite benötigt. Außerdem ist mit dem Stahlkanal das Dränageproblem noch nicht beseitigt.

Diesem Problem wird durch die Vorschläge gemäß DE-A 34 47 836 und 39 36 003 begegnet, indem begehbare Stahlblechkanäle auf Stützen angeordnet werden. Nachteilig bei allen Blechkanälen ist der notwendige Korrosionsschutz und die notwendige Erdung der Kanäle gegen Stromschläge.

Es ist ebenfalls vorgeschlagen worden, in Großserien durch Kunststoffpritzen herstellbare Hauben für Erdkabel zu verwenden (DE-U 19 74 671 und DE-A 22 20 745). Derartige Kabeldeckelelemente können u.a. aus Polyethylen und Polypropylen bestehen und durch Loch/Zapfen-Verbinder miteinander gekoppelt werden. Dabei ist auch schon dem Problem der UV-Beständigkeit Beachtung geschenkt worden. Gegebenenfalls können die Kunststoffhauben auch mit Innenrippen zur Versteifung versehen werden. Derartige Kabelhauben lösen nicht das Problem, Kabel sicher in grobkörnigem Bahndamm-Material trassenbegleitend abzudecken und Oberflächenwasser von den Kabeln fern zu halten. Die Kunststoffhauben werden in der Regel für Überlandleitungen eingesetzt, um einen gewissen Grabschutz gegen Baumaschinen oder Spaten zu erhalten; vielfach werden auch diese Hauben wasserdurchlässig angefertigt, um eine Wasserzufuhr zur Kühlung und Durchfeuchtung des Erdreiches zu ermöglichen.

Ein für Gleisanlagen verwendbarer Kabelkanal aus Kunststoff ist mit der DE-A 26 01 641 vorgeschlagen worden. Dabei wird zunächst eine Wanne aus Sandwichmaterial bestehend aus GFK und/oder Rovings mit einer Schutzschicht aus PUR oder PVC oder Polyesther gefertigt, wobei die Wannenränder schräg auswärts nach unten gerichtet sind, damit sie einem in gleicher Art zusammengesetzten Sandwich-Deckel die Möglichkeit bieten, diese Wannenränder nach Art eines Schnappverschlusses zu umgreifen. Die einzelnen Kanalelemente sollen durch ein Muffensystem miteinander verbunden werden. Der Deckel wird mit einer in Kunstharz gebundenen Feinkiesschicht überzogen, damit er trittsicher begehbar ist. Eine derartige Sandwichbauweise ist in der Fertigung außerordentlich aufwendig und diese Materialien sind nach Zerstörung nicht durch Recycling wieder zu gewinnen. Auf Grund der notwendigen Wanddicke ergibt sich zudem ein großer Verbrauch an teuren Glasfasern, die - weil in der Regel nicht verseifungsfest und daher durch Wasser zu beschädigen - mit einer Haut aus weiteren Kunststoffmaterialien überzogen werden müssen. Deshalb wurde vorgeschlagen, bei einer zu erwartenden Wasserbelastung zusätzlich Bleifolien in die Wandungen der Kabelkanäle zu integrieren, die ihrerseits dann wieder durch Zwischenkunststoffschichten mit den weiteren Kunststoffen verbindbar gestaltet werden müssen.

Schließlich wurde in dem Dokument FR-A-2199799 ein aus mehreren Kammern bestehender Kabelkanal aus PVC mit Deckel beschrieben, dessen doppellagige Kammerwände im Querschnitt wabenförmig gerippt sind. Er kann nur durch Extrusionsverfahren hergestellt werden. Der Kanal ist sehr kompliziert und aufwendig. Verfahrensbedingt kann der Kanal keine Hinterschnitte für Verriegelungen, Scharniere und ähnliches aufweisen. Der dünne instabile Deckel hat lediglich eine Klemmbefestigung und mehrere Stützwände zur Auflagerung. Das Material ist nicht recyclefähig. Der Kanal genügt nicht den Bedingungen für die Einerdung; die am Deckel und Körper vorhandenen Klemmflächen dürfen nicht verunreinigt werden. Er ist für Kabelführung in Betonfundamenten oder unter Bürgersteigen vorgesehen.

In FR-A-2625839 ist eine gattungsfremde U-förmige Wasserrinne aus Kunststoff offenbart, deren lose aufgelegte Abdeckung Durchbrüche für die Zufuhr von Oberflächenwasser aufweist. Die Durchbrüche lassen ein trittsiches Begehen nicht zu; eine Verwendung für eingeerdete Kabelkanäle ist nicht erwähnt. Es wird empfohlen die Wasserrinne einzubetonieren, um den Vertikaldruck durch Befahren mit Automobilen widerstehen zu können.

Von daher liegt der Erfindung das Problem zugrunde, einen verrottungsfesten, begehbaren, einerdbaren Kabelkanal aus Kunststoff, insbesondere für Gleistrassen vorzuschlagen, der wirtschaftlich herstellbar, außerordentlich leicht aus billigen Materialien zu fertigen ist, die selbst wiedergewinnbar sind und trotzdem eine Steifigkeit des Kanales vorzusehen, die ein Begehen ermöglichen, wobei besondere Rücksicht auf die typischen Verhältnisse an Bahndämmen zu nehmen ist. Eine weitere Problemstellung ergibt sich durch die nicht zufriedenstellenden Dränagemöglichkeiten nach dem Stand der Technik.

Die Lösung der Probleme ist den Ansprüchen 1 und 14 sowie 24 beschrieben. Weiterbildende Merkmale der Erfindung sind in den Unteransprüchen erfaßt.

Der erfindungsgemäße Kabelkanal besteht aus einerdbaren, begehbaren Elementen, in Wannenform mit einem darauf plazierten Deckel, wobei die Wanne aus recyclefähigem und/oder recycletem thermoplastischem Kunststoff besteht, ihre Seitenwände mindestens mit Rippen versehen sind und die Ränder der Wannen als doppelt abgewinkelte, horizontale und schließlich vertikal nach oben Profile ausgebildet sind, auf denen bzw. zwischen denen der begehbare Deckel liegt und dort im Bereich der Wannenränder mit Mitteln zur formschlüssigen Befestigung versehen ist.Der Deckel weist eine trittsichere etwa waagerechte geschlossene Oberfläche auf. Ein solcher Kabelkanal hat die nötige Steifigkeit, um den Deckel begehen zu können, wobei insbesondere die Verrippung der Wanne und die breite Auflagefläche der Deckel dieses ermöglichen. Zudem ist sichergestellt, daß mit der Befestigung des Deckels, dieser nicht durch Windsog vorbeifahrender Züge aufgerissen wird. Die Befestigungsmittel bestehen an einem Wannenrand aus ein Scharnier bildende, fallenartige Vorsprünge des Wannenrandes, die ihrerseits einen formschlüssigen Umgriff eines komplementären Vorsprunges an dem Deckel ermöglichen. Beispielsweise kann eine derartige Falle aus zwei gegeneinander geneigten Zapfen oder Lamellen, die aus dem waagerechten Teil des Wannenrandes herausragen und oben einen Abstand aufweisen bestehen. Zwischen diese Lamellen kann beispielsweise eine angelartige, runde Kunststoffnase des Deckels eingedrückt werden, sodaß der Deckel nunmehr um diese gefangene Nase bis zu 180° gedreht oder bei einer Drehung um beispielsweise 90° aus der Falle wieder herausgezogen werden kann. Am anderen Wannenrand sind Vorsprünge oder Hinterschnitte vorgesehen, die von einem in den Deckel integrierten Dreh- oder Schiebeverschluß hintergriffen werden können, sodaß der Deckel nur mit Verwendung beispielsweise eines speziellen Schlüssels oder Werkzeuges zu öffnen ist. Er ist damit gegen unbefugtes Öffnen gesichert.

Anstelle eines Scharniers können auch an beiden Wannenrändern Dreh- oder Schiebeverschlüsse mit entsprechenden Fallen vorgesehen werden. Für Montagearbeiten wird in diesem Fall der Deckel komplett entfernt.

Bei der spritztechnischen Ausbildung dieser Hinterschnitte und Vorsprünge an den Wannenrändern kann es aus konstruktionstechnischen Gründen erforderlich sein, Schieber in die Werkzeuge einzusetzen, die dann entsprechende Durchbrüche am zu formenden Teil benötigen. Derartige Durchbrüche im horizontalen Bereich der Wannenränder können gleichzeitig zur Abfuhr von Wasser und Schmutz benutzt werden, sofern ein Wassereinbruch über die Wannenränder überhaupt vorkommen kann. Die Wanne selbst sollte aus recyclefähigem und/oder recycletem, nicht notwendigerweise sortenreinem thermoplastischem Kunststoff, z.B. Polyethylen oder Polypropylen oder Poly-Vinyl-Acetat herstellt werden. Ein Werkstoff, der sich problemlos spritztechnisch verarbeiten läßt und heute in großen Mengen zu günstigen Preisen erhältlich ist.

Die Wanne wird an den Seitenwänden mit sich senkrecht auswärts von den Seitenwänden weg erstreckenden Rippen versteift, wobei die Versteifungen vom Wannenrand bis in den Bodenbereich der Wanne reichen können oder den Boden selbst zusätzlich auch noch mal spantenartig von außen umfangen. Alternativ ist vorgesehen, diese Wannen mit Seitenwänden - wie für sich aus dem Stand der Technik bereits bekannt - wellenförmig, beispielsweise als Sinuswelle, auszubilden und so eine vergrößerte Steifigkeit zu erreichen. Die Wellenform der Seitenwände endet unter den Wannenrändern, die der Deckelauflage dienen.

Aus kunststoffspritztechnischen Gründen und zur besseren Handhabung der Wanne als Kabeltrog ist vorgesehen, daß die Seitenwände der Wanne innen zwar auch Hinterschnitte aufweisen können, aber sich möglichst zur Öffnungsseite hin auswärts geneigt erstrecken. Rücksprünge werden beispielsweise im Wanneninneren zur Aufnahme von Kabelhaltern vorgesehen, damit ein Teil der Kabel sortiert und unterscheidbar im Kanal anzuordnen ist.

In Fortbildung des Erfindungsgedankens soll an den Enden der Wannen im Bereich der Wannenränder mindestens an einer Seite eine Öffnung vorgesehen werden, der sich als Schlitz bis zum Ende Wanne hin erstreckt. Dadurch ergibt sich die Möglichkeit an dem komplementären Ende der benachbarten Elemente eines endlos zu bildenden Kabelkanales, Vorsprünge anzuordnen, die komplementär zu den Öffnungen und Schlitzen geformt sind, so daß die Wannen durch Einrasten der Vorsprünge in die Öffnungen miteinander koppelbar sind. Dabei kann vorgesehen werden, daß ein Wannenende auf jeder Seite Öffnungen erhält oder, daß jedes Wannenende eine Öffnung auf einer Seite und einen Vorsprung auf der anderen Seite der Wanne erhält.
Unter benachbarten Elementen werden aber auch nebeneinander oder übereinander liegende Wannen verstanden, die durch spezielle Steckverbinder miteinander koppelbar sind.

Weiterhin ist vorgesehen, daß die Vorsprünge oder Steckverbinder in ihrem Querschnitt kleiner als die Öffnungen in den Wannenrändern sind, damit zum einen eine Fertigungstoleranz überwindbar ist und zum anderen die Möglichkeit gegeben ist, die Kabelkanalelemente endlos aneinandergereiht auch im Bogen zu verlegen, wobei das Spiel zwischen den komplementären Teilen so groß gestaltet werden soll, daß der Mindestradius bei Eisenbahngleisen von etwa 100 m erreichbar ist.

In manchen Fällen hat es sich als notwendig oder sinnvoll erwiesen, innerhalb der Wanne eine Teilung, z.B. zwischen Steuer- und Telefonkabeln einerseits und Starkstromkabeln anderseits vorzunehmen. In diesem Fall kann in den Boden der Wanne ein Durchbruch eingebracht werden oder bereits werkseitig vorgesehen sein, der ein Einsetzen von Wannenteilern in Form einer auf den Boden aufzusetzenden Rippe, die Wanne in zwei oder mehr Längskammern teilt. Ebenso können in den Boden Durchbrüche eingearbeitet oder werkseitig vorgesehen werden, die der Verankerung der Wanne im Boden dienen, indem eine Baustahlnadel oder ein lanzenartiger Stift durch die Bodenlöcher in das Erdreich gedrückt wird. Die Durchbrüche sorgen gleichzeitig für die Abfuhr von Kondensat oder eingedrungenem Wasser.

Aus Gründen der Austauschbarkeit und weil Betondeckel häufig für vorhandene Betonkanäle bevorratet werden, können alternativ die Kunststoffdeckel gegen Betondeckel ausgetauscht werden. Bei Auswechslung der Kunststoffdeckel können die dafür vorgesehenen fallenartigen Vorsprünge an den Wannenrändern mit einem geeigneten Werkzeug entfernt werden. Betondeckel sind von vornherein rutschsicher begehbar. Eine Befestigung des Deckels erübrigt sich auf Grund seines Gewichtes. Ein sattes Anliegen zwischen den Wannenrändern erschwert zudem ein unbefugtes Abheben des Betondeckels.

Das Dränageproblem bei den Kabelkanälen wird auf völlig neuartige Weise gelöst, indem am Kabelkanal seitlich und unter dem Boden dränierbare, wasserdurchlässige Elemente angelegt werden, wobei aber weder Beton, noch Sand, noch Kies zur Anwendung kommt, sondern künstlich hergestellte Mittel oder Körper, die einen wasserdurchlässigen Zwischenraum zwischen dem Erdreich und der Wanne des Kabelkanalelementes bilden. Derartige Mittel können aus einzelnen oder Mischungen von Stoffen der Gruppe Styropor, Kunststoffgranulat, gemahlene Altreifen, Tonkugeln oder Wirrfaservlies oder ähnlichen und gleichwirkenden Stoffen bestehen, die in bestimmte Formen oder Zwischenräume an den Kabelkanalelementen gedrückt werden oder selbst, als eigenständige Körper vorgeformt und als wasserdurchlässiger Zwischenkörper mit dem Kabelkanal eingesetzt oder mit diesem verbindbar sind. Derartige Stoffe können als Schale ausgebildet sein, die wannenartig das Kabelkanalelement umgreifen oder eine derartige Schale kann aus einzelnen, z.B. Seitenwänden und Bodenplatten zusammengesetzt sein. Im letzteren Fall bedarf es keiner aufwendigen Form für die Herstellung der wasserdurchlässigen Körper, sondern diese können aus Platten zugeschnitten werden. Ein solcher Körper, beispielsweise aus Styropor, kann mit dem Kunststoffboden und den Seitenwänden verklebt oder zwischen den Rippen der Wanne können Plattenteile eingefügt werden, die dort klemmend gehalten werden, wozu die Rippen und/oder Wannenränder auch zusätzlich mit Hinterschnitten versehen sein können.

Ein weitere Möglichkeit besteht darin, der Wanne für die Aufnahme der Kabel eine zusätzliche zweite Schale oder Hülle zuzuordnen, die teilweise z.B. an deren Seitenwände an die Wanne bzw. an die Wannenränder angespritzt ist und nur im Bodenbereich mit einer zusätzlichen Platte verschlossen wird.

Andererseits können diese Hüllen selbst wiederum als offene, wannenartige Schalen ausgebildet sein, die dann um eine komplementäre Styroporschale gestülpt werden und so als Träger für eine einzusetzende Kabelwanne dienen können. Auch diese Hüllen können durch Kleben und/oder Schweißen und/oder entsprechende Hinterschnitte an den Wannenrändern mit der eigentlichen Kabelwanne verbunden werden, sodaß man schließlich ein werksseitig komplett vorbereitetes Kabelkanalelement mit Dränagekörper erhält. Damit derartige grobporige Dränagekörper aus Styropor oder in Wirrlage liegenden Fasern, die ein Vlies bilden, überhaupt ihre Funktion erfüllen können, muß die Hülle natürlich selbst siebartig oder maschenartig durchbrochen sein, damit Wasser vom Erdreich über den Zwischenraum über den Dränagekörper abfließen kann. In der Praxis hat es sich als möglich erwiesen, grobkörnig gemahlene Altreifen für ein derartiges Dränageelement zu verwenden; bevorzugt wird jedoch die Verwendung von Körpern aus Styroporkugeln oder Tonkugeln, wie sie beispielsweise aus der Bautechnik von Häusern bzw. von Blumenkübeln her bekannt sind. Ergänzend oder alternativ zu den Drainkörpern können auch Drainmatten oder mehrlagige Vlies-oder Folien-Matten zur Wasserabfuhr in der Nähe der Kabelkanäle angewendet werden. Derartige Vliese sind aus dem Bahnoberbau für andere Anwendungen bekannt.

In Fortführung der Erfindung soll der Boden und/oder die Seitenwand der Wanne in bestimmten, vordefinierbaren Abständen mit Markierungen und/oder Sollbruchstellen versehen werden, an denen Durchbrüche für Kabelzu- und Abführungen anbringbar sind. Derartige Durchbrüche können leicht mit Bohrern und Stichsägen hergestellt werden, entweder indem jedes einzelne Wannenteil und/oder alle Elemente, der aus einer Hülle, einem Dränagezwischenelement und der inneren Kabelwanne bestehenden kompletten Kabelkanäle, gemeinsam durchstoßen werden. In besonderen Fällen können an den Kabelkanal auch Abzweigkanäle in der gleichen Weise angekoppelt werden, wie bei hintereinanderliegenden Wannen.

In Weiterführung des Erfindungsgedankens kann die Kabelwanne selbst bzw. die Wannenränder bzw. die Umhüllung der Dränagekörper mit Verbindungsstücken versehen sein, die es erlauben, daran wiederum Pflanztröge anzubringen, sodaß sich eine Böschungsbegrünung eines Bahndammes mit Hilfe derartiger, mit Pflanzsubstrat gefüllter, Kunststoffelemente ergeben kann.

Die Kabelwannen, in ihrer einfachsten Ausführung, sind ineinander endlos stapelbar, wenn die Deckel abgenommen und separat als Flachteile zur Baustelle verfrachtet werden. Ein kompletter Kabelkanal mit Dränageelementen und/oder äußerer Umhüllung ist durch Ineinanderstapeln transportierbar, wenn die einzelnen Kabelkanalelemente jeweils um 90° zueinander gekippt werden; so ergibt sich ein Stapel von drei übereinanderliegenden komplett werkseitig vorbereiteten Kabelkanalelementen.

An Hand von schematischen Zeichnungen soll die Erfindung näher erläutert werden. Es zeigen:
- Fig. 1 a, b: eine Wanne des Kabelkanalelementes in perspektivischer Draufsicht und im Querschnitt,
- Fig. 2 a, b: eine perspektivische Draufsicht auf das Ende einer Wanne gemäß Fig. 1 und ein Zubehörteil,
- Fig. 3 a, b,: Verbindungsmöglichkeiten zweier Kabelkanalelemente hintereinander,
- Fig. 4: ein Kabelkanalelement mit Deckel und Dränagekörper im Querschnitt,
- Fig. 5: eine weitere Ausführung eines Kabelkanalelementes im Querschnitt,
- Fig. 6 a, b: nebeneinander angeordnete Kabelkanalelemente und Verbinder,
- Fig. 7 a, b: übereinander angeordnete Kabelkanalelemente und Verbinder,
- Fig. 8 a, b, c,: Einbausituationen von erfindungsgemäßen Kabelkanälen im Schnitt.

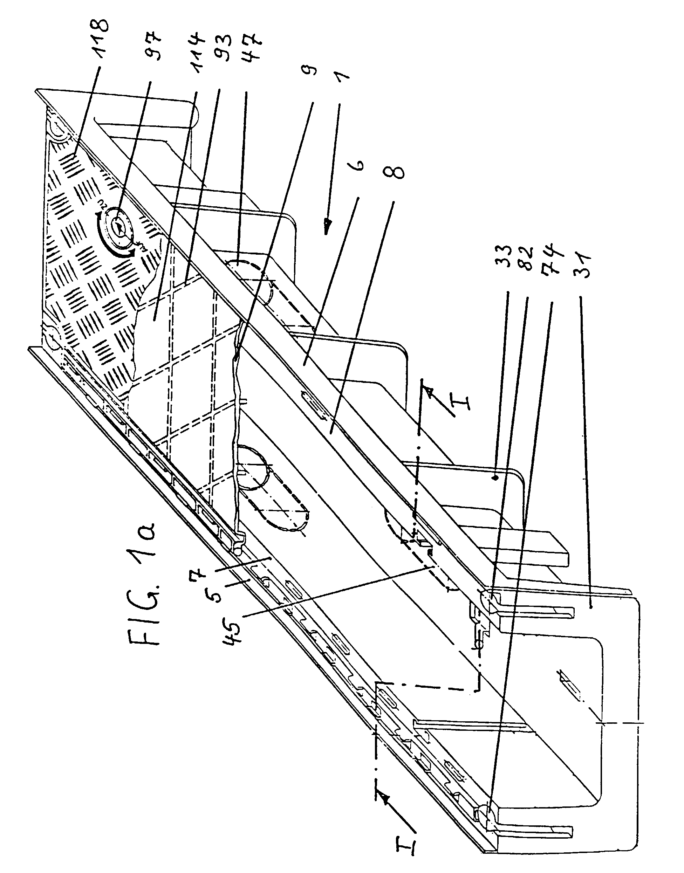

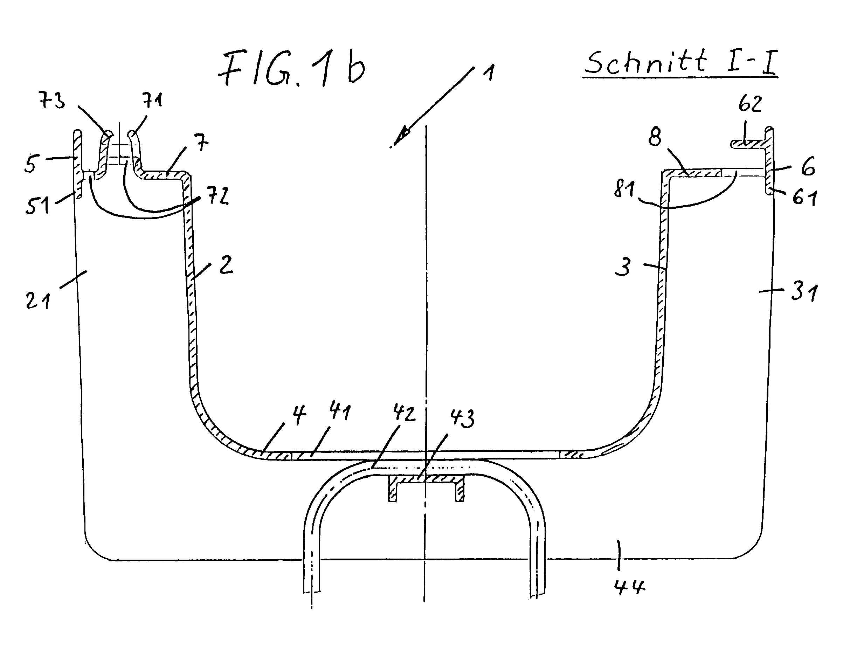

Fig. 1 a zeigt die Wanne 1 eine aus recycletem Polyethylen gefertigten Kabelkanalelementes mit mehrfach gebrochen dargestelltem Deckel 9 und einer möglichen Anordnung von versteifenden Rippen 93 und den Verschluß des Deckels, mit einem durch Schlüssel betätigbaren Drehzylinder 97 mit seinen Stellungen "Auf" und "Zu". Die Oberfläche 114 ist mit einer brandhemmenden Metallfolie 118 überzogen, die zudem in sich strukturiert ist, damit sie sicher begehbar ist. Die Folie dient dem Schutz des Kabelkanales z.B. bei Böschungsbränden. Sie kann auch durch eine geeignete Imprägnierschutzschicht aus Kunststoffolie oder Lacken ersetzt werden. Das Kabelkanalelement weist verschiedene runde, ovale oder eckige Markierungen 45, 46, 47 in Boden und Seitenwand der Wanne 1 auf, die geeignete Stellen kennzeichnen, an denen Durchbrechungen für die Einführung von Kabeln vorgenommen werden können. Rippen 31, 33 sorgen für die nötige Steifigkeit des Kanals.

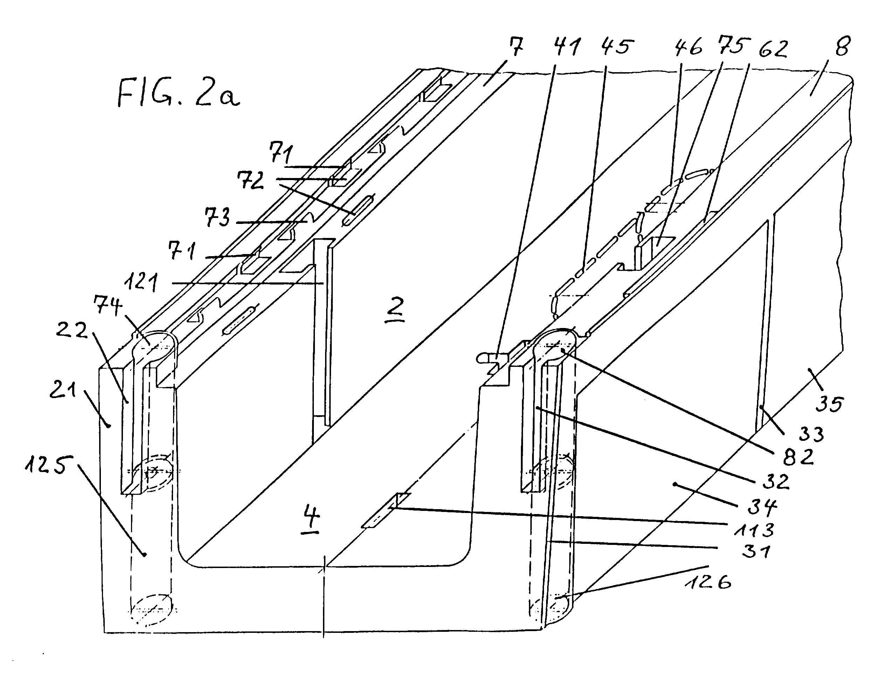

In Fig. 1 b zeigt eine Wanne 1 des Kabelkanalelementes analog Fig 1 a in vergrößertem Schnitt I-I mit den schräg nach oben auswärts geneigten Seitenwänden 2, 3 sowie dem angeformten Boden 4. Der Boden weist einen Durchbruch 41 auf, der durch eine Halterung 43 überbrückt wird. Durch die Öffnung 41 kann ein die Überbrückung 43 umgreifender Baustahlstab 42 als Bodenverankerung der Wanne gedrückt werden. Die Seitenwände und der Boden werden durch jeweils einstückige Rippen mit den Teilen 21, 31, 44 spantenförmig umgriffen und enden unter den Wannenrändern, bestehend aus den horizontalen Teilen 7, 8 und den vertikalen äußeren Teilen 5,6. Die horizontalen Abschnitte 7, 8 dienen der Auflage eines Deckels (Fig. 1 a, 4, 5). Der Vorsprung 62 sowie die Vorsprünge 71, 73, die in Längsrichtung abwechselnd lückenhaft auf dem Wannenrand sitzen, dienen der vertikalen und der horizontal längs gerichteten Fixierung des hier nicht dargestellten Deckels 9. Die Ränder 5 und 6 begrenzen die seitliche Verschieblichkeit des Deckels und dienen gleichzeitig als Schmutz- und Wasserabweiser zu dem benachbarten Erdreich. Eventuell überfließendes Wasser kann durch die spritztechnisch bereits benötigten Öffnungen z.B. 72 und 81 durch den Wannenrand nach unten abgeleitet werden. Die vertikalen Ränder 5, 6 können nach unten über die Horizontalteile 7, 8 hinaus mit Nasen 51, 61 versehen werden, um z.B. gemäß Fig. 2 Styroporteile 34, 35 klemmend zu halten.

Fig. 2 a zeigt in perspektivischer Darstellung das Ende einer derartigen Wanne in der Draufsicht. Deutlich ist zu sehen, daß die Zapfen 73, 71 sich in Längsrichtung lückenhaft auf dem Wannenrand 7 aufstellen, während auf dem gegenüberliegenden Wannenrand 8 die Falle 62 für den Deckel angebracht ist. Zusätzlich zur Falle 62 können noch mehrere Fallen angeordnet werden. In die Lücken zwischen den Vorsprüngen 73 und 71 greifen entsprechend verzahnte Elemente des Deckels (Fig. 1 a, 4, 5) ein, die kürzer sind als die jeweilige Lücke. Dadurch und durch eine relativ lange Ausbildung der Falle 62 ergibt sich eine Längsverschieblichkeit des Deckels, die bei Bildung von Kurvenradien mit dem Kabelkanalelement oder aus Paßungenauigkeitsgründen ausgenutzt werden kann. Der Boden 4 ist mit einer Markierung 45, 46, z.B. für das Ansetzen einer Stichsäge oder für eine runden oder ovale Perforierung versehen, an der ein Durchbruch erzeugt werden kann. Dieser Durchbruch dient einer Kabeleinführung oder -ausführung. Zwischen den Rippen 31 und 33 sind Styroporplatten 34, 35 angeordnet, die dort angeklebt oder eingeklemmt sein können und als Dränageelement für seitlich vom Erdreich herrührendes Wasser dienen.

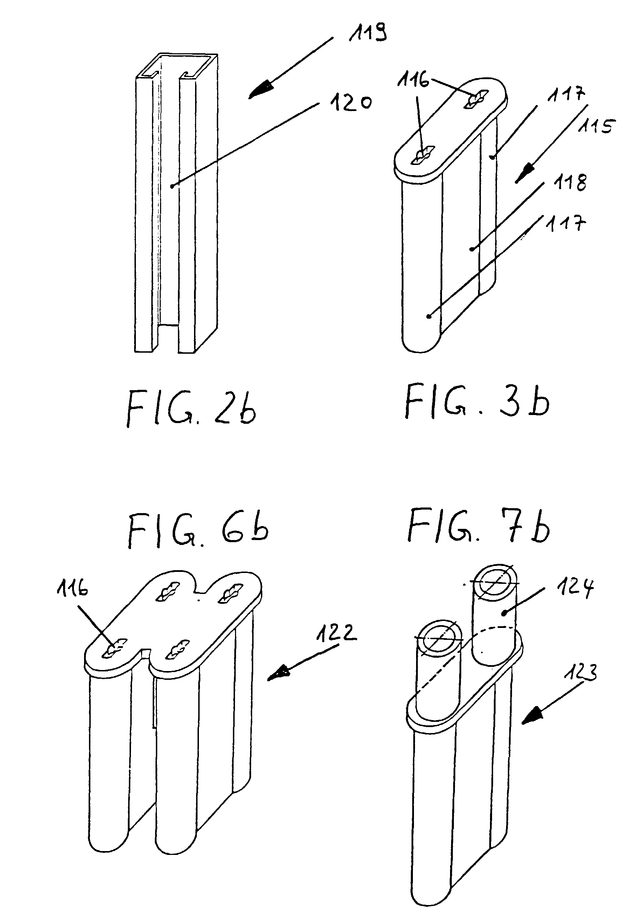

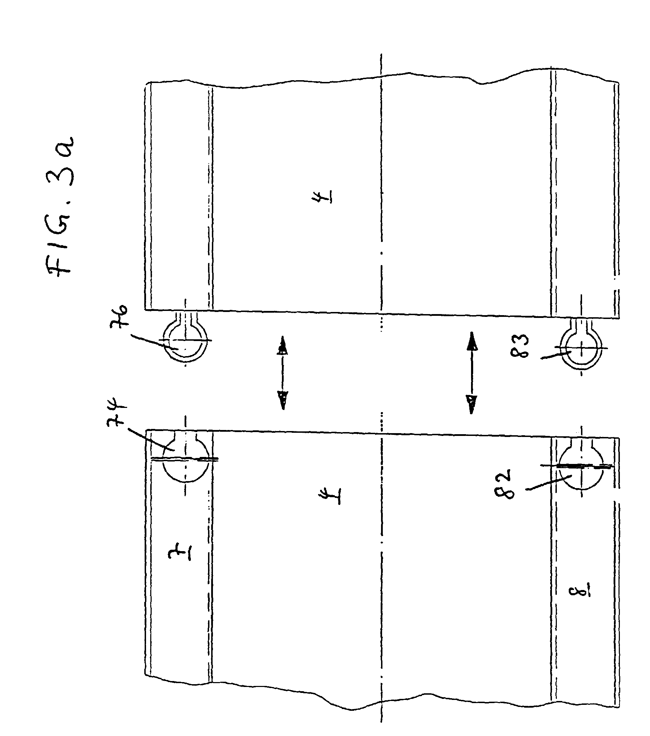

Flüssigkeiten, die über den Rand 5, 6 der Wanne 1 laufen, können außer durch die Schlitze 72 auch durch die Öffnungen 82 und 74 in die Dränageelemente 34 ablaufen, sofern diese nur den horizontalen Randbereich der Wanne durchstoßen und unten offen sind. Primär sind diese Öffnungen 74, 82 jedoch obere Zugänge eines integral als, mit ovalem oder kreisförmigem Querschnitt und Teil der Wandung der Wanne ausgebildeten Hohlraumes, der am Wannenende in Schlitzen 22, 32 der Rippen 21, 31 endet. Zur Verriegelung hintereinander liegender Wannen - gemäß Fig. 3a-sind komplementär ausgebildete Zapfen 76, 83, am Ende der benachbarten Wanne vorgesehen, um so die KabelKanalelemente fest miteinander zu verhaken. Dadurch ist ein seitliches Verschieben der Kabelkanalelemente zueinander - abgesehen von dem Spiel der komplementären Teile - und der Radienbildung - ausgeschlossen und die Kabel liegen sicher auf den Böden 4 der Kabelwannen. Anstelle der Verbinder gemäß Fig 3 a können auch einzelne Stecker 115, integral aus Zylindern 117 mit Zwischenstück 118 geformt und mit Schlüsselloch 116 versehen (Fig. 3 b), in die komplementären Öffnungen 74 bzw. 82 und ebensolche an benachbarten Wannen 1 eingesetzt werden, die dann allerdings ohne die Zapfen 76, 83 gefertigt werden.

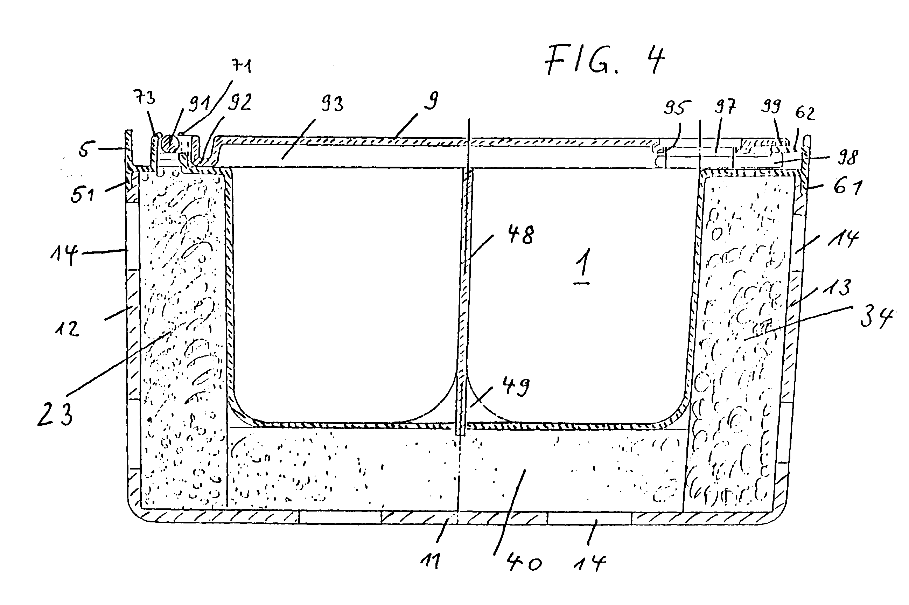

In Fig. 2 a sind in den Seitenwänden der Wanne außerdem Rücksprünge 75 zu erkennen, die der Aufnahme speziell geformter metallener Montageschienen 119 (Fig. 2 b) dienen, die so in die Rücksprünge 75 eingesetzt werden, daß die Schlitze 120, 121 einen gemeinsamen Durchgang bilden. Durch diesen können nach Verlegen der Wanne 1 Schellen oder Tragelemente für das Auflegen von Kabeln in den Montageschienen fixiert werden. Derartige Schellen sind erforderlich, um einen Diebstahl hochwertiger Kabel zu verhindern und/oder eine geordnete sofort erkennbare Plazierung von Kabeln unterschiedlicher Funktionen und Größen zu ermöglichen. Die Schlitze 113 dienen dem Einstecken von Zwischenwänden 48 (Fig. 4) und/oder dem Ablauf von Kondensat oder während Montage oder Betrieb eingedrungenem Wasser.

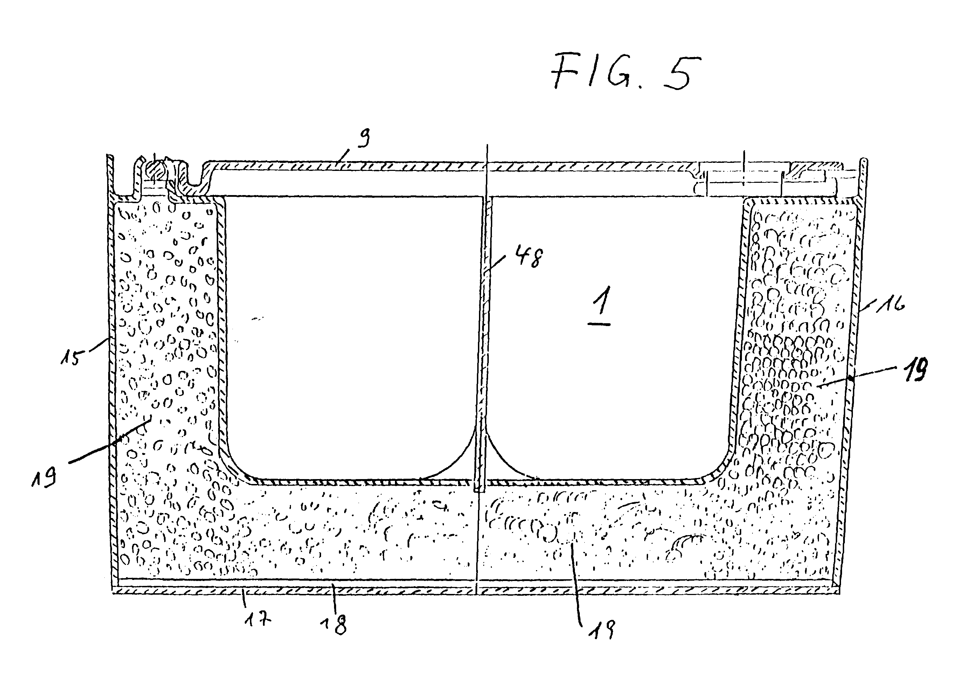

Die Fig. 4 und 5 zeigen alternative Anordnungen von Dränageelementen bzw. ein komplett montiertes Element für einen Kabelkanal mit aufgesetztem Deckel 9 und Wannenteiler 48, die sich an Rippen 49 auf bzw. in dem Boden des Elementes 1 abstützen. Die innere Kabelwanne wird gemäß Fig.4 von Styroporplatten oder Wirrfaserstücken 23, 34, 40 für die Seiten sowie den Boden 4 umgeben, in die durch die Löcher 14 der aus einem Boden 11 und Seitenwänden 12 bzw. 13 gebildeten einteiligen Hülle Wasser einströmen und ausfließen kann. An den Nasen 51, 61 kann diese Hülle mit der eigentlichen Kabelwanne verbunden werden, sodaß sich ein kompletter einbaubarer Wannenkörper ergibt.

Der Deckel 9 weist eine Rundnase 91, eine nutartig geformte Auflage 92, Versteifungsrippen 93, die im Bereich einer Bohrung 95 ausgenommen sind, sowie eine Auflagenase 99 für die Falle 62 am Wannenrand auf. Die Bohrung 95 im Deckel 9 wird durch einen mit Schlüssel betätigbaren Drehzylinder 97 durchsetzt, der in einer schwenkbaren Zunge 98 endet, die nach Drehen des Zylinders 97 unter der Falle 62 zur Anlage kommt und so den Deckel gegen Abheben sichert. Nach Wegdrehen der Zunge 98 kann der Deckel um die Rundnase 91, die zwischen den Vorsprüngen 71 und 73 gefangen ist, um 180° gedreht werden, bis die Hohlkehle in Teil 92 des Deckels 9 auf dem Wannenrand 5 zur Anlage kommt. In dieser Endstellung oder auch durch entsprechende Formgestaltung der Rundnase 91 in einer vorherigen Vertikal/90°-Stellung kann die Rundnase 91 und damit der Deckel 9 zwischen den Vorsprüngen 71 und 73 vertikal aus der dargestellten Koppel-Position mit der Wanne gehoben werden.

Fig. 5 zeigt in einer analoger Weise zu Fig. 4 eine an die Wanne 1 angespritzte Hülle mit den Seiten 15, 16, die durch einen mit Rippen 18 versehenen Deckel 17 am Boden verschlossen werden kann. Nicht dargestellt sind Durchbrüche in den Seitenwänden und dem Bodenteil der Hülle, durch die Wasser zu-und abströmen kann. Der Dränagekörper, z.B. aus aufgeschichtetem granuliertem Altreifenmaterial 19 kann bereits werkseitig in den Zwischenraum zwischen der Hülle und der Wanne eingefüllt sein.

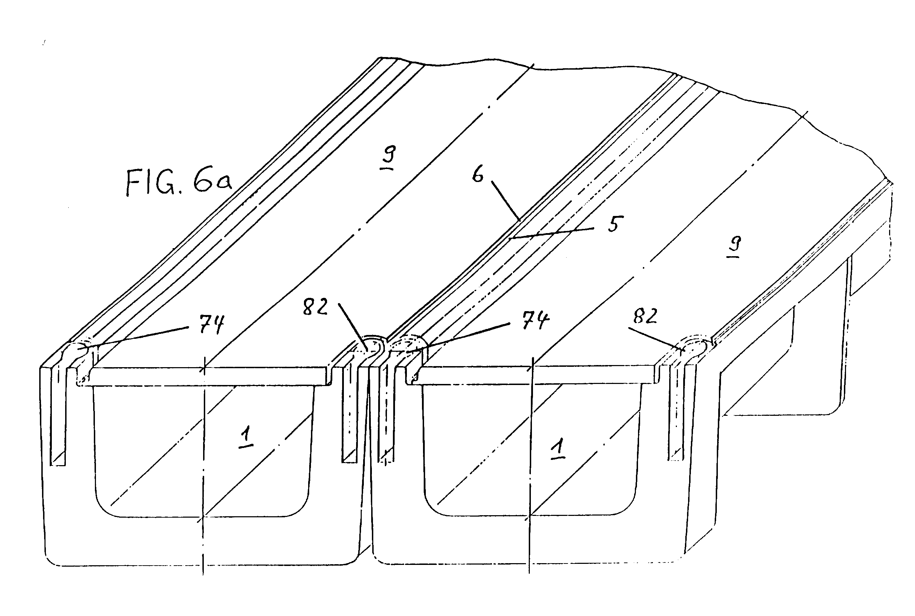

Fig. 6 a zeigt wie zwei Wannen 1 ähnlich denen gemäß Fig. 1 a mit ihren Rändern 5, 6 aneinanderstoßend angeordnet werden können. Die nebeneinander liegenden Öffnungen 82, 74 beider Wannen 1 können mittels in Fig 6 b dargestellter Stecker 122 mit zwei weiteren - nicht dargestellten - Wannen verbunden werden. Die in den außenliegenden Wandungen der Wannen 1 des Doppelkanales erkennbaren Öffnungen 74, 82 können wiederum mittels Steckern 115 (Fig. 3 b) mit den anzugliedernden, in Reihen zu legenden Wannen verriegelt werden.
Anstelle des Vierfach-Steckers 122 mit Schlüssellöchern 116 können natürlich ebenso Doppel-Stecker 115 oder eine Verbinder Variante gemäß Fig. 3 a verwendet werden.

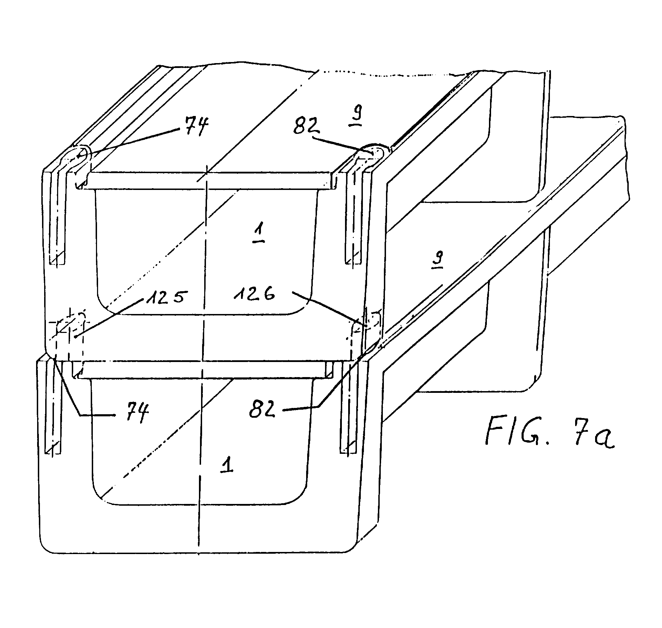

Fig. 7 a zeigt zwei übereinander angeordnete Kabelkanalelemente mit Wannen 1 und Deckeln 9 vor dem Zusammenbau.
Bei derartigen doppelstöckigen Kanälen ist alternativ vorgesehen, für den oberen Kanal die an sich gleichartigen Wannen 1 mit zylindrischen Rücksprüngen 125, 126, wie schon in Fig. 2 a angedeutet, zu versehen, die integraler Bestandteil der Wandung der Wannen 1 sind, um spezielle Steckverbinder 123 (Fig. 7 b) einzusetzen. Diese Steckverbinder 123 haben als Basis einer, dem Stecker 115 ähnlichen Körper, auf dem Zylinder oder Rohre 124 sitzen, die in die Hohlräume 125, 126 der oberen Wanne 1 eindringen können und so die übereinanderliegenden Wannen mit weiteren in Längsrichtung davor angeordneten Wannen zu verbinden.

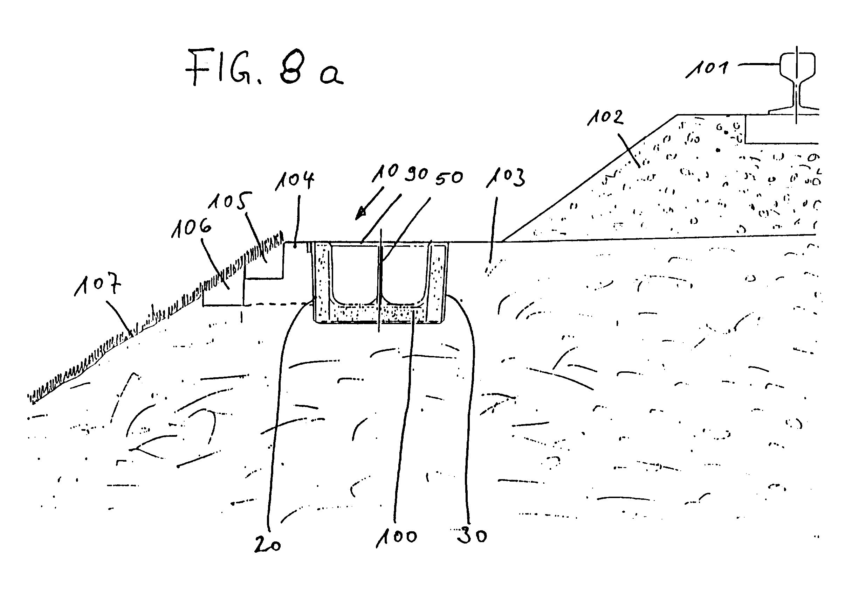

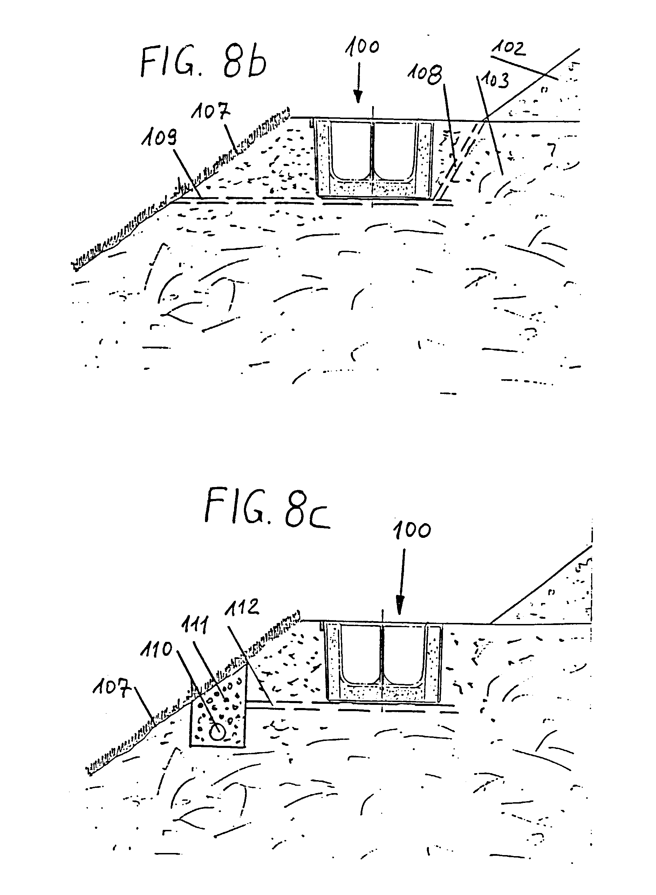

Fig. 8 a zeigt einen aus einem Schotterbett 102 mit Bahngleis 101 sowie dem Planum 103, der in einer Böschung 107 endet, strukturierten Bahndamm. Neben dem Schotterbett 102 ist ein nicht dargestellter Graben geschaffen worden, in den ein Kabelkanalelement 10 mit Deckel 90 eingesetzt ist, wobei der Deckel 90 zusätzlich durch den Wannenteiler 50 gestützt werden kann. Die eigentliche Kabelwanne ist umhüllt mit einem Dränagekörper aus Styropor 100; dieser wiederum ist umschlossen durch eine Hülle 20, 30. Seitwärts durch die Wände 20, 30 einströmendes Wasser kann durch den Dränagekörper 100 nach unten abgeführt werden. Böschungsseitig weist die Seitenwand 20 der Hülle des Kabelkanalelementes ein Verbindungstück 104 auf, an das Pflanztröge aus Kunststoff 105, 106 angehängt sind, die ihrerseits ein Pflanzsubstrat enthalten, um die Böschung im kritischsten Bereich begrünen und gegen Abrutschen des Erdreiches sichern zu können.

Die Seitenwand 20 selbst oder das Verbindungsstück 104 kann alternativ auch als Rippe ausgebildet sein, die sich treppenstufenartig bis zur Böschung 107 erstreckt. Dabei kann sich das Dränageelement 100 auch bis zwischen die Rippen zur Böschung 107 hin erstrecken.

Fig. 8 b, c zeigen einen Bahndamm ähnlich Fig. 8 a jedoch mit zusätzlichen Drainageelementen. Gemäß Fig. 8 b kann zur besseren Abfuhr von Oberflächenwasser der Einbau von Drainvliesen oder Drainmatten 108, 109, 112 vorgesehen werden. Derartige Drainmatten für eine Wasserabfuhr in Mattenebene sind im Handel für andere Drainageprobleme im Bahnbau erhältlich. Sie werden erfindungsgemäß benutzt, um ein Ausspülen des Bahndamm-Materials im Bereich des Kabalkanales 100 zu vermeiden, indem eine Drainmatte 109 im Bereich des Bodens des Kabelkanals 100 oder unter dessen Drainagekörper angeordnet wird, um so das Wasser zur Böschung 107 abzuleiten (Fig. 8 b) Im Falle der Anordnung gemäß Fig 8 c mit einem Drainagerohr 110 in einer Filterschicht 111 an der Böschung 107 oder in anderen Fällen innerhalb des ebenen Bahndammbereiches, kann das Wasser entlang der Drainmatte 112 in die Filterschicht 111 laufen. Ergänzend kann gemäß Fig 8 b hangseitig vor dem Kabelkanal 100 in dem Planum 103 neben dem Schotterbett 102 hilfsweise eine weitere Drainmatte 108 zur Wasserableitung angeordnet sein.

## Patentansprüche

1. Einerdbares, begehbares Element für einen Kabelkanal aus Kunststoff, insbesondere zur Anordnung entlang einer Gleistrasse, umfassend eine im Querschnitt U-förmige Wanne, deren Seitenwände an den Wannenrändern auswärts abgewinkelt sind sowie einen auf den Wannenrändern aufliegenden Deckel mit trittsicherer etwa waagerechter geschlossener Oberfläche, wobei die Wanne (1, 10) aus recyclefähigem und/oder recycletem thermoplastischem Kunststoff besteht, mindestens ihre Seitenwände (2, 3) mit Rippen (21, 31, 33) versehen, die Wannenränder zunächst auswärts etwa horizontal (7, 8) und im Anschluß daran etwa vertikal (5, 6) nach oben abgewinkelt sind, der Deckel (9, 90) zwischen den vertikalen Teilen (5,6) der Wannenränder und auf den horizontalen Teilen aufliegend, angeordnet ist und an den Wannenrändern Mittel (62, 71, 73) zur formschlüssigen Befestigung des Deckels vorgesehen sind.

2. Element nach Anspruch 1, dadurch gekennzeichnet, daß die Rippen als stegartige Vorsprünge (21, 31, 33, 44) der Seitenwände (2, 3) unterhalb der Wannenränder und des Wannenbodens (4) oder als geometrisch regelmäßige Wellen in den Seitenwänden ausgebildet sind.

3. Element nach Anspruch 1 oder 2, dadurch gekennzeichnet, daß die Seitenwände (2, 3) der Wanne (1, 10) sich vom Boden (4) weg auswärts geneigt erstrecken.

4. Element nach einem der Ansprüche 1 bis 3, dadurch gekennzeichnet, daß der Deckel (9, 90) Versteifungen (92, 93) aufweist, mit denen er auf Teilen (7, 8) der Wannenränder aufliegt.

5. Element nach einem der Ansprüche 1 bis 4, dadurch gekennzeichnet, daß die Mittel zur formschlüssigen Befestigung des Deckels (9) ein Scharnier bildende, fallenartige Vorsprünge (71, 73) des Wannenrandes (7) zum formschlüssigen Umgriff eines komplementären Vorsprunges (91) des Deckels sowie einen weiteren Vorsprung (62) am gegenüberliegenden Wannenrand (6) zum Hintergreifen durch einen beweglichen Verschluß (97, 98) des Deckels (9) umfassen.

6. Element nach einem der Ansprüche 1 bis 4, dadurch gekennzeichnet, daß die Mittel zur formschlüssigen Befestigung des Deckels (9) , an beiden gegenüberliegenden Wannenrändern (6) Vorsprünge (62) zum Hintergreifen durch bewegliche Verschlüsse (97, 98) des Deckels (9) umfassen.

7. Element nach einem der Ansprüche 1 bis 6, dadurch gekennzeichnet, daß als thermoplastischer Kunststoff ein recyclter Werkstoff aus der Gruppe Polyethylen, Polypropylen, Poly-Vinyl-Acetat verwendet wird.

8. Element nach einem der Ansprüche 1 bis 7, dadurch gekennzeichnet, daß die Wannenränder (7, 8) im horizontalen Bereich Durchbrüche (72, 81) für die Abfuhr von Wasser und Schmutz aufweisen.

9. Element nach einem der Ansprüche 1 bis 8, dadurch gekennzeichnet, daß die Wannenränder (7, 8) Öffnungen (74, 82, 125, 126) am Ende der Wanne (1, 10) aufweisen, in die komplementär geformte Vorsprünge (76, 83) oder Stecker (115, 122, 123) zur Verriegelung benachbarter Wannen einrastbar sind.

10. Element nach Anspruch 9, dadurch gekennzeichnet, daß die komplementär geformten Vorsprünge (76, 83) oder Stecker (115, 122, 123) einen etwa runden Querschnitt haben, der um ein Maß kleiner ist als die Öffnungen (74, 82, 125, 126), welches ausreicht, benachbarte Wannen im Bogen mit einem Radius von mindestens 100 m zu koppeln.

11. Element nach einem der Ansprüche 1 bis 10, dadurch gekennzeichnet, daß der Boden (4) und/oder die Seiten der Wanne (1, 10) Rücksprünge (75) und/oder Durchbrüche (41) zum Einsetzen von Verankerungsmitteln (42, 119) oder Wannenteilern (48) aufweist.

12. Element nach Anspruch 11, dadurch gekennzeichnet, daß die Verankerungsmittel Vorrichtungen zur Kabelbefestigung umfassen.

13. Element nach einem der Ansprüche 1 bis 12, dadurch gekennzeichnet, daß anstelle eines Deckels (9) aus Kunststoff ein Deckel aus Beton eingesetzt wird.

14. Einerdbares, begehbares Element für einen Kabelkanal aus Kunststoff, insbesondere zur Anordnung entlang einer Gleistrasse (101), umfassend eine im Querschnitt U-förmige Wanne (1, 10) mit einem etwa ebenen Deckel (9, 90) und ein an der Wanne mindestens an einer Seite (2, 3, 20, 30) und unter dem Boden (4) angeordnetes, einen Zwischenraum zwischen Erdreich (103) und Wanne etwa ausfüllendes, nicht als Naturstoff vorkommendes, grobporiges, wasserdurchlässiges Mittel (19, 23, 34, 35, 40, 100).

15. Element nach Anspruch 14, dadurch gekennzeichnet, daß das durchlässige Mittel aus einzelnen Stoffen oder Mischungen davon aus der Gruppe Styropor, Kunststoffgranulat, gemahlene Altreifen, Tonkugeln, Wirrfaservlies oder gleichwirkenden Stoffen besteht.

16. Element nach einem der Ansprüche 1 bis 14, dadurch gekennzeichnet, daß das wasserdurchlässige Mittel als Schale (19, 100) für die Wanne (1, 10) ausgebildet ist.

17. Element nach einem der Ansprüche 14 bis 16, dadurch gekennzeichnet, daß die Schale aus einzelnen Platten (23, 34, 35, 40) zusammengesetzt ist.

18. Element nach einem der Ansprüche 1 bis 17, dadurch gekennzeichnet, daß die Wanne (1, 10) von einer einen Zwischenraum für das wasserdurchlässige Mittel (19, 23, 34, 35, 40, 100) bildenden, mit Durchbrüchen (14) versehenen, mit der Wanne (1, 10) verbindbaren, einstückigen (11, 12, 13) oder mehrstückigen (15, 16, 17) Hülle umgeben ist.

19. Element nach einem der Ansprüche 1 bis 18, dadurch gekennzeichnet, daß am Boden (4) und/oder der Seitenwand (2, 3 ) der Wanne Markierungen (45, 46, 47) für in die Wanne einzubringende Durchbrüche für Kabeleinführungen angebracht sind.

20. Element nach einem der Ansprüche 1 bis 19, gekennzeichnet durch eine mindestens Teile (5 - 9) des Elementes abdeckende, wenigstens gegen Brand widerstandsfähige, Beschichtung (118).

21. Element nach einem der Ansprüche 1 bis 20, dadurch gekennzeichnet, daß bei Verlegung des Elementes (10) im Bereich einer Böschung (107) an einer Seite (20) des Elementes Verbindungsstücke (104) für Pflanztröge (105, 106) angebracht sind.

22. Element nach Anspruch 21, dadurch gekennzeichnet, daß die Verbindungsstücke (104) als treppenförmige Rippen an einer Seite (20) des Elementes ausgebildet ist.

23. Element nach einem der Ansprüche 1 bis 22, dadurch gekennzeichnet, daß die Wanne (1, 10) und die Schale (19) bzw. (23, 34, 40) bzw. (100) und gegebenenfalls die Hülle (11 - 13 bzw. 15 - 17) als vormontiertes Element zur Baustelle lieferbar ist.

24. Verwendung von aus einzelnen Elementen nach einem der Ansprüche 1 bis 23 bestehenden Kabelkanälen in Kombination mit Styroporkörpern oder ähnlichen aus grobporigen Stoffen gebildeten Körpern als Dränageelement (100), wobei die Körper außen an im Erdreich (103) neben Bahngleisen (101) verlegten Kabelkanälen (10) aus Kunststoff angeordnet sind.

25. Verwendung nach Anspruch 24, dadurch gekennzeichnet daß zusätzlich oder anstelle der Körper unmittelbar unter den Kabelkanälen abwasserführende Drainmatten (109, 112) angeordnet sind.

## Claims

1. Ground insertable, traversable element for a cable duct formed from plastics material, more especially for disposal along a railtrack, including a trough, which has a U-shaped cross-section, the lateral walls of which trough are outwardly angled at the trough edges, and a cover, which rests on the trough edges and is provided with a tread-safe, substantially horizontal, continuous surface, wherein the trough (1, 10) is formed from recyclable and/or recycled thermoplastic plastics material, at least its lateral walls (2, 3) are provided with ribs (21, 31, 33), the trough edges are angled initially outwardly substantially horizontally (7, 8) and subsequently substantially vertically (5, 6) upwardly, the cover (9, 90) is disposed between the vertical parts (5, 6) of the trough edges and lies on the horizontal parts, and means (62, 71, 73) are provided on the trough edges for the fitting securement of the cover.

2. Element according to claim 1, characterised in that the ribs are configured as web-like projection members (21, 31, 33, 44) of the lateral walls (2, 3) below the trough edges and the trough base (4) or as geometrically regular shafts in the lateral walls.

3. Element according to claim 1 or 2, characterised in that the lateral walls (2, 3) of the trough (1, 10) extend in an outwardly inclined manner away from the base (4).

4. Element according to one of claims 1 to 3, characterised in that the cover (9, 90) has reinforcements (92, 93), by means of which it rests on parts (7, 8) of the trough edges.

5. Element according to one of claims 1 to 4, characterised in that the means for the fitting securement of the cover (9) include catch-like projection members (71, 73) of the trough edge (7), which members form a hinge, for surrounding a complementary projection member (91) of the cover in a fitting manner, and an additional projection member (62) on the oppositely situated trough edge (6) for a displaceable closure (97, 98) of the cover (9) to engage therebehind.

6. Element according to one of claims 1 to 4, characterised in that the means for the fitting securement of the cover (9) include, on the two oppositely situated trough edges (6), projection members (62) for displaceable closures (97, 98) of the cover (9) to engage therebehind.

7. Element according to one of claims 1 to 6, characterised in that a recycled material, from the group polyethylene, polypropylene, polyvinyl acetate, is used as the thermoplastic plastics material.

8. Element according to one of claims 1 to 7, characterised in that the trough edges (7, 8) have, in the horizontal region, openings (72, 81) for the removal of water and dirt.

9. Element according to one of claims 1 to 8, characterised in that the trough edges (7, 8) have apertures (74, 82, 125, 126) at the end of the trough (1, 10), in which apertures complementarily shaped projection members (76, 83) or plugs (115, 122, 123) are engageable for the interlocking of adjacent troughs.

10. Element according to claim 9, characterised in that the complementarily shaped projection members (76, 83) or plugs (115, 122, 123) have a substantially circular cross-section, which is smaller than the apertures (74, 82, 125, 126) by a dimension which is sufficient to connect adjacent troughs in an arc having a radius of at least 100 m.

11. Element according to one of claims 1 to 10, characterised in that the base (4) and/or the sides of the trough (1, 10) have sockets (75) and/or openings (41) for the insertion of retaining means (42, 119) or trough dividers (48).

12. Element according to claim 11, characterised in that the retaining means include devices for securing the cable.

13. Element according to one of claims 1 to 12, characterised in that a cover formed from concrete is used instead of a cover (9) formed from plastics material.

14. Ground insertable, traversable element for a cable duct formed from plastics material, more especially for disposal along a railtrack (101), including a trough (1, 10), which has a U-shaped cross-section and is provided with a substantially flat cover (9, 90) , and a coarse-pored, water-permeable means (19. 23, 34, 35, 40, 100), which is disposed on the trough at least on one side (2, 3, 20, 30) and below the base (4), said means substantially filling an intermediate space between the ground (103) and trough and not occurring as natural material.

15. Element according to claim 14, characterised in that the permeable means is formed from individual substances or mixtures thereof from tile group polystyrene foam, plastics material granules, ground used tyres, clay balls, non-woven fibre matting or like substances.

16. Element according to one of claims 1 to 14, characterised in that the water-permeable means is configured as shell (19, 100) for the trough (1, 10).

17. Element according to one of claims 14 to 16, characterised in that the shell comprises individual plates (23, 34, 35, 40).

18. Element according to one of claims 1 to 17, characterised in that the trough (1, 10) is surrounded by a one-piece (11, 12, 13) or multi-part (15, 16, 17) covering, which forms an intermediate space for the water-permeable means (19, 23, 34, 35, 40, 100), said covering being provided with openings (14) and being connectable to the trough (1, 10).

19. Element according to one of claims 1 to 18, characterised in that markers (45, 46, 47) are provided on the base (4) and/or on the lateral wall (2, 3) of the trough for openings, which are to be formed in the trough, for cable insertions.

20. Element according to one of claims 1 to 19, characterised by a coating (118), which covers at least parts (5 - 9) of the element and is resistant at least to fire.

21. Element according to one of claims 1 to 20, characterised in that, when the element (10) is laid in the region of a slope (107), connectors (104) for plant containers (105, 106) are provided on one side (20) of the element.

22. Element according to claim 21, characterised in that the connectors (104) are configured as step-like ribs on one side (20) of the element.

23. Element according to one of claims 1 to 22, characterised in that the trough (1, 10) and the shell (19) or respectively (23, 34, 40) or respectively (100) and possibly the covering (11 - 14 or respectively 15 - 17) can be delivered to the construction site as a pre-assembled element.

24. Use of cable ducts, which comprise individual elements according to one of claims 1 to 23, in combination with polystyrene foam bodies, or similar bodies formed from coarse-pored materials, as drainage element (100), wherein the bodies are disposed externally on cable ducts (10), which are laid in the ground (103) adjacent railtracks (101) and are formed from plastics material.

25. Use according to claim 24, characterised in that drainage mats (109, 112), which conduct waste water away, are disposed directly beneath the cable ducts in addition to or instead of the bodies.

## Revendications

1. Elément pouvant être mis en terre et mobile pour un caniveau de câbles en plastique, en particulier pour le montage le long d'un tracé de voie, comprenant un bac en forme de U vu en coupe transversale, dont les parois latérales sont coudées vers l'extérieur sur les bords du bac, et un couvercle reposant sur les bords du bac avec une surface fermée, à peu près horizontale et antidérapante, le bac (1, 10) étant à base de plastique thermoplastique recyclable et/ou recyclé, au moins leurs bords latéraux (2, 3) étant pourvus de nervures (21, 31, 33), les bords du bac étant coudés vers le haut, au début vers l'extérieur à peu près horizontalement (7, 8) et par la suite à peu près verticalement (5, 6), le couvercle (9, 90) reposant entre les parties verticales (5, 6) des bords du bac et sur les parties horizontales, et des moyens (62, 71, 73) pour la fixation mécanique par conjugaison de forme du couvercle étant prévus sur les bords du bac.

2. Elément selon la revendication 1, caractérisé en ce que les nervures sont conçues comme des parties saillantes (21, 31, 33, 44) des parois latérales (2, 3) au-dessous des bords du bac et du fond du bac (4) ou bien comme des ondulations régulières au plan géométrique dans les parois latérales.

3. Elément selon la revendication 1 ou 2, caractérisé en ce que les parois latérales (2, 3) du bac (1, 10) s'étendent en partant du fond (4) de façon inclinée vers l'extérieur.

4. Elément selon l'une quelconque des revendications 1 à 3, caractérisé en ce que le couvercle (9, 90) présente des renforts (92, 93) avec lesquels il repose sur des parties (7, 8) des bords du bac.

5. Elément selon l'une quelconque des revendications 1 à 4, caractérisé en ce que les moyens pour la fixation mécanique par conjugaison de forme du couvercle (9) comprennent des parties saillantes (71, 73), formant une charnière et du type loquet, du bord du bac (7) pour envelopper par conjugaison de forme une partie saillante (91) complémentaire du couvercle et une autre partie saillante (62) sur le bord du bac (6) situé en face pour être saisis à l'arrière par une fermeture (97, 98) mobile du couvercle (9).

6. Elément selon l'une quelconque des revendications 1 à 4, caractérisé en ce que les moyens pour la fixation mécanique par conjugaison de forme du couvercle (9) comprennent sur les deux bords du bac (6) se faisant face des parties saillantes (62) pour être saisis à l'arrière par des fermetures (97, 98) mobiles du couvercle (9).

7. Elément selon l'une quelconque des revendications 1 à 6, caractérisé en ce qu'on utilise comme plastique thermoplastique un matériau recyclé provenant du groupe polyéthylène, polypropylène, polyvinylacétate.

8. Elément selon l'une quelconque des revendications 1 à 7, caractérisé en ce que les bords du bac (7, 8) présentent dans la zone horizontale des percements (72, 81) pour l'évacuation de l'eau et de la poussière.

9. Elément selon l'une quelconque des revendications 1 à 8, caractérisé en ce que les bords du bac (7, 8) présentent des ouvertures (74, 82, 125, 126) sur l'extrémité du bac (1, 10) dans lesquelles des parties saillantes (76, 83) formées de façon complémentaire ou des fiches (115, 122, 123) peuvent être encliquetées pour le verrouillage de bacs voisins.

10. Elément selon la revendication 9, caractérisé en ce que les parties saillantes (76, 83) formées de façon complémentaire ou les fiches (115, 122, 123) ont une section transversale à peu près ronde, qui est un peu plus petite que les ouvertures (74, 82, 125, 126), ce qui suffit pour coupler des bacs voisins dans la courbure avec un rayon d'au moins 100 m.

11. Elément selon au moins l'une quelconque des revendications 1 à 10, caractérisé en ce que le fond (4) et/ou les côtés du bac (1, 10) présentent des parties en retrait (75) et/ou des percements (41) pour l'insertion de moyens d'ancrage (42, 119) ou de séparateurs de bac (48).

12. Elément selon la revendication 11, caractérisé en ce que les moyens d'ancrage comprennent des dispositifs pour la fixation des câbles.

13. Elément selon l'une quelconque des revendications 1 à 12, caractérisé en ce qu'un couvercle en béton est utilisé à la place d'un couvercle (9) en plastique.

14. Elément pouvant être mis en terre et perméable pour un caniveau de câble en plastique, en particulier pour le montage le long d'un tracé de voie (101), comprenant un bac (1, 10) en forme de U en section avec un couvercle (9, 90) à peu près plan et un moyen (19, 23, 34, 35, 40, 100) disposé sur le bac au moins sur un côté (2, 3, 20, 30) et sous le fond (4), remplissant un espace intermédiaire entre la terre (103) et le bac, ne se présentant pas comme un produit naturel, à gros pores et perméable à l'eau.

15. Elément selon la revendication 14; caractérisé en ce que le moyen perméable est à base de différents produits ou mélanges de ces produits provenant du groupe polystyrène, granulat de plastique, pneus usagés broyés, boules en argile, non-tissés à fibres embrouillées ou produits ayant le même effet.

16. Elément selon l'une quelconque des revendications 1 à 14, caractérisé en ce que le moyen perméable à l'eau est conçu comme une coque (19, 100) pour le bac (1, 10).

17. Elément selon l'une quelconque des revendications 14 à 16, caractérisé en ce que la coque est composée de plaques (23, 34, 35, 40) individuelles.

18. Elément selon l'une quelconque des revendications 1 à 17, caractérisé en ce que le bac (1, 10) est entouré par une enveloppe formant un espace intermédiaire pour le moyen perméable à l'eau (19, 23, 34, 35, 40, 100), pourvu de percements (14), pouvant être relié au bac (1, 10), en une seule pièce (11, 12, 13) ou en plusieurs pièces (15, 16, 17).

19. Elément selon l'une quelconque des revendications 1 à 18, caractérisé en ce que des repères (45, 46, 47) destinés à des percements à pratiquer dans le bac pour des entrées de câble sont disposés sur le fond (4) et/ou la paroi latérale.

20. Elément selon l'une quelconque des revendications 1 à 19, caractérisé par un revêtement (18) recouvrant au moins des parties (5 - 9) de l'élément, et résistant au moins à l'incendie.

21. Elément selon l'une quelconque des revendications 1 à 20, caractérisé en ce que des pièces de raccord (104) pour des bacs à plantes (105, 106) sont disposées sur un côté (20) de l'élément en cas de pose de l'élément (10) dans la zone d'un talus (107).

22. Elément selon la revendication 21, caractérisé en ce que les pièces de raccord (104) sont conçues comme des nervures en escalier sur un côté (20) de l'élément.

23. Elément selon l'une quelconque des revendications 1 à 22, caractérisé en ce que le bac (1, 10) et la coque (19) ou (23, 34, 40) ou (100) et éventuellement l'enveloppe (11 - 13 ou 15 - 17) peuvent être livrés en tant qu'élément prémonté pour le chantier.

24. Utilisation de caniveaux de câble comprenant des éléments individuels selon l'une quelconque des revendications 1 à 23 en combinaison avec des corps en polystyrène ou des corps similaires constitués de produits à gros pores en tant qu'élément de drainage (100), les corps étant disposés à l'extérieur sur des caniveaux de câble (10) en plastique posés dans la terre (103) à proximité de voies équipées de deux rails (101).

25. Utilisation selon la revendication 24, caractérisé en ce que, en supplément ou à la place des corps, des mats de drainage (109, 112) transportant des eaux usées sont disposés directement au-dessous des caniveaux de câble.
